# EUROPEAN PATENT APPLICATION

(11) **EP 2 239 488 A1**
(43) Date of publication of application: **13.10.2010**
(21) Application number: 09157625.6
(22) Date of filing: 08.04.2009
(51) Int. Cl.: F16L 3/10, F16L 3/22

(54) **Pipe securing system, pipe receiving element, and use thereof.**

(71) Applicant: NedShipGroup S.A., 6922 Morcote, Lugano (CH)
(72) Inventor: Celikkol, Orhan Esref, Uskudar - Istanbul (TR)
(74) Representative: Hendriksen, David

(57) **Abstract**

This invention relates to a pipe receiving element (100) for reducing vibration and/or movement of a pipe, the pipe receiving element (100) comprising a first pipe holding part (101), and a second pipe holding part (101), each pipe holding part (101) comprising a half- or semi circular surface part (102), wherein the first and second pipe holding part (101) when joined are adapted to receive a pipe, and wherein the pipe receiving element (100) further comprises securing means (103) adapted to secure at least one pipe holding part (101) of the pipe receiving element (101) to another first and/or second pipe holding part (101), and/or additional securing means (106) adapted to secure a first holding part (101) to a second pipe holding part (101) , and wherein at least a part of said first and said second pipe holding part (101) are made of elastic material and use thereof in a pipe securing system.

Furthermore, the invention relate to a pipe securing system (105) comprising at least two pipe receiving elements (100) where one pipe receiving element (100) has a first given length in a given direction while the other pipe receiving element (100) has a second given length in the given direction where the second given length is an integer fraction of the first given length.

In this way, a highly flexible, compact and modular pipe securing system is obtained that easily is adapted to fit a specific need of pipes in a given situation and at the same time providing noise reduction or elimination.

## Description

### FIELD OF THE INVENTION

The present invention relates to securing of pipes or similar conduits in boats, ships, offshore structures, or other types of seagoing vessels or generally at any other location where pipes or similar conduits are used. More specifically, the invention relates to a pipe receiving element, a use of a pipe receiving element and a pipe securing system.

### BACKGROUND OF THE INVENTION

Often pipes or similar conduits (forth denoted pipes) □ e.g. for gas, water or other liquids, or the like □ on boats, ships, offshore structures, other types of seagoing vessels, or at any other location where pipes are used, etc. are secured to a ceiling or to a wall or under a floor by simple securing means like metal or wood clamps, strips, brackets, bands or the like that typically secure the pipes more or less directly against the respective ceiling, wall, or floor.

When the pipes are used, the movement or flow of the contents of the pipes will cause movement in the pipes, which again will induce vibration and movement of the pipes. This holds especially for pipes containing water or other liquids due to an increased weight pr. volume unit compared e.g. to the weight of a gas pr. volume unit.

When the pipes are secured directly against the ceiling, wall or floor then noise is generated by the vibration and movement of the pipes.

Furthermore, when a sea vessel or offshore structure is at sea, vibrations caused by the waves impact to th e sea vessel or offshore structure can also cause the pipes to vibrate and move and thereby causing noise in such a situation as well, even if the pipes are not currently in use.

Traditionally, when more than a single pipe is secured they are not done so in a very flexible and/or place optimizing way.

Various methods have been proposed in order to solve or alleviate at least some of these aspects.

Patent specification US 5,098,047 discloses a tube clamp assembly for receiving a rigid coupling or flexible elastomeric grommet. The grommets are disposed about a fluid line for absorbing shock and vibration in order to rigidly support the fluid line in a fixed routing.

The tube clamp comprises a pair of oppositely facing clamping members each having a generally U-shaped cross section molded from a fairly rigid oil-resistant organic polymeric material.

Patent specification US 5,261,633 discloses a pipe support system for securely holding a pipe so as to isolate the pipe to prevent transmission of sound or heat. It can accommodate a plurality of pipes.

The carrier units comprise two C-shaped or one O-shaped ring cushion member that is used for surrounding the pipe. A two-piece support hang having a circular opening holds the carrier (and hence the pipe) in place. It is mentioned that the C-shaped cushion should be made of a flexible plastic, polymer, or other material having elastic qualities.

Patent specification US 6,193,195 discloses a tube clamping device with two separate halves. These two halves can be joined together by using nuts, holding the pipe in between these two parts. It is discloses that the halves can simultaneously contain pipes of different diameter at the same time.

Patent specification US 2,354,919 discloses a clamp for carrying elongated cylindrical structures such as pipe. It can accommodate pipes of different diameters at the same time. Pipes are clamped in between two halves and tightened by screws. The holding seats are provided with elastic resilient clamping means.

Patent application US 2003/0025048 discloses a multiple tube clamping device comprising two hemi-cylinderical elongated halves in which multiple pipes of same size can be accommodated.

Patent specification US 5,083,372 discloses a device for clamping multiple tubes parallel at the same time. The device comprises two elongated parallel bar halves for clamping the tubes. These two halves can be joined together using screws or by welding.

Patent disclosure JP 2006220169A discloses a vibration absorbing clamp to be used with pipes. The device comprises a pipe holding part and a pipe connection part. The pipe is inserted in the holding parts of device. Both these parts are made up of elastic material.

Furthermore, patent disclosures WO 2008/002129A2, US 6,290,201, and US 6,152,406 also relate to vibration reduction or pipe fasteners.

However, none of the cited prior art teaches a solution according to the present invention.

### OBJECT AND SUMMARY OF THE INVENTION

It is an object of the invention to provide a system, device, and use that at least to an extent alleviates one or more drawbacks of the prior art.

Another object is to reduce or eliminate noise due to movement and/or vibration of at least one pipe in an expedient way.

A further object is to provide a system enabling easy securing of pipes.

A further object is to provide a flexible and compact pipe securing system.

This is achieved by a pipe receiving element for reducing vibration and/or movement of a pipe, the pipe receiving element comprising a first pipe holding part, and a second pipe holding part, each pipe holding part comprising at least one half- or semi circular surface part, wherein the first and second pipe holding part when fitted together are adapted to receive a pipe, and wherein the pipe receiving element further comprises securing means adapted to secure at least one pipe holding part of the pipe receiving element to another first and/or second pipe holding part, and/or additional securing means adapted to secure a first holding part to a second pipe holding part, and wherein at least a part of said first and said second pipe holding part are made of elastic material.

In this way, a pipe receiving element or module is obtained that provides noise reduction and/or noise elimination of a secured pipe during use.

Furthermore, the pipe receiving element is readily usable in a compact pipe securing system.

In one embodiment, the first and the second pipe holding part each are of a generally U- or C-shape, and wherein said first and said second pipe holding part are joined or fitted together in such a way that the opening of their general U- or C-shape faces each other.

In one embodiment, a substantial part of said first and said second pipe holding part are made of elastic material, at least said half- or semi circular surface part of each said first and said second pipe holding part are made of elastic material, or said first and said second pipe holding part entirely are made of elastic material.

In one embodiment, the elastic material is rubber or silicone.

In one embodiment, the securing means comprises a general L-shaped, T-shaped, cone-shaped, or ▷-shaped cut-out, groove, or recess and a general double L-shaped, double T-shaped, double cone-shaped, or double ▷-shaped split or pin being interlocking, and/or the additional securing means comprises a general L-shaped, T-shaped, cone-shaped, or ▷-shaped cut-out, groove, or recess and a general band or box being interlocking.

In one embodiment, a center of an area being defined by the half- or semi circular surface part of said a first and said second pipe holding parts is located more towards one side than another side.

In one embodiment, the half- or semi circular surface part of a pipe holding part is defined by at least one flexible member where each flexible member is connected by a flexible connection portion to said pipe holding part.

In this way, the flexibility of the connection portions enable them to deform or bend more easily and can thereby accommodate different sizes of pipes and becomes more universal. For larger diameter pipes it will simply deform more.

The present invention also relates to a pipe securing system comprising at least two pipe receiving elements where one pipe receiving element has a first given length in a given direction while the other pipe receiving element has a second given length in the given direction where the second given length is an integer fraction of the first given length.

In this way, a highly flexible, compact and modular pipe securing system is obtained that easily is adapted to fit a specific need of pipes in a given situation at a given location.

In one embodiment, the at least two pipe receiving elements are pipe receiving elements according to any one of claims 1 □ 7.

In this way, a highly flexible, compact and modular pipe securing system is obtained that easily is adapted to fit a specific need of pipes in a given situation and at the same time providing noise reduction or elimination.

The present invention also relates to a use of at least two pipe receiving elements according to any one of claims 1 □7 in a pipe securing system.

### BRIEF DESCRIPTION OF THE DRAWINGS

These and other aspects of the invention will be apparent from and elucidated with reference to the illustrative embodiments shown in the drawings, in which:
Figures 1a □ 1c schematically illustrate one embodiment of a pipe holding part according to an embodiment the present invention;
Figure 2 schematically illustrates a pipe receiving element according to an embodiment of the present invention;
Figures 3a □ 3g schematically illustrate alternative embodiments of a pipe holding part;
Figure 4 schematically illustrates a partially exploded perspective view of one embodiment of a modular pipe securing system;
Figure 5 schematically illustrates the embodiment of Figure 4 in a non-exploded view;
Figure 6 schematically illustrates an alternative embodiment of a modular pipe securing system with alternative pipe receiving elements and pipe holding parts; and
Figure 7a □ 7c schematically illustrate various configurations of a modular pipe securing system.

### DESCRIPTION OF PREFERRED EMBODIMENTS

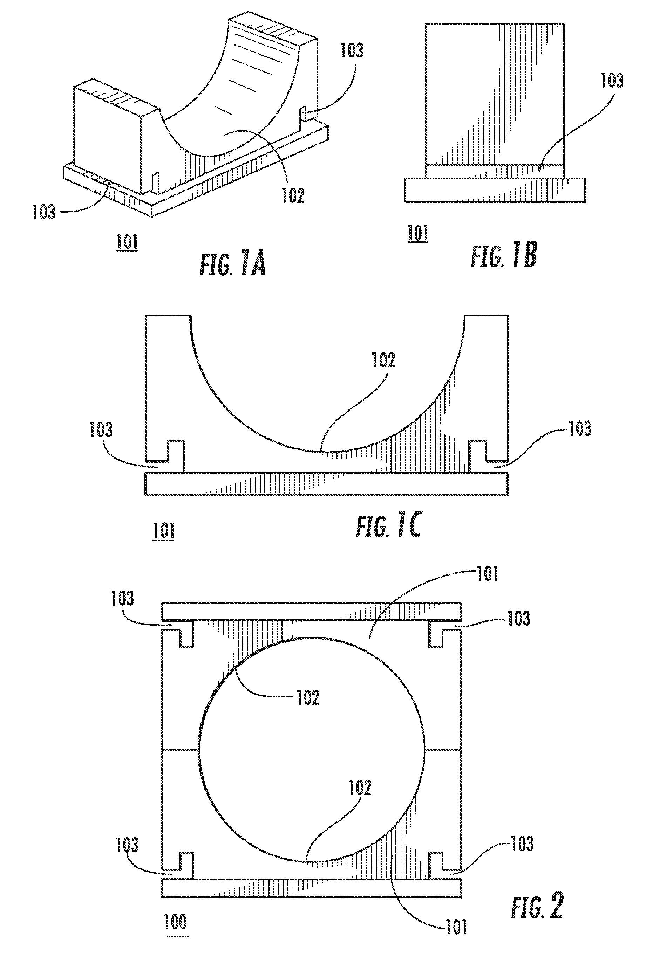

Figures 1a □ 1c schematically illustrate one embodiment of a pipe holding part according to an embodiment the present invention.

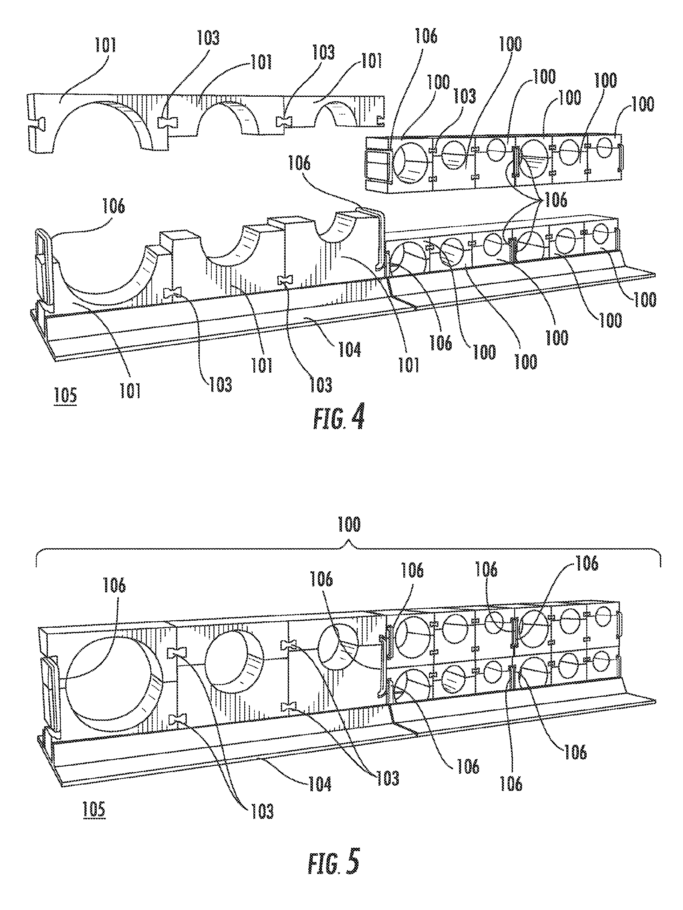

Figure 1a schematically illustrates a perspective view of a first (or second) pipe holding part (101) according to an embodiment of the present invention. The pipe holding part (101) may comprise securing means (103) in the form of cut-outs, grooves, recesses, etc. for securing the pipe holding part (101) to one or more other pipe holding parts (not shown; see e.g. Figures 4 □6). The cut-outs, grooves, recesses, etc. may e.g. be of a general L-shape (with the L rotated 90° to either side as shown), T-shape, cone-shape, or ▷ -shape. The securing means (103) may also comprise (not shown) an interlocking double□ shape (in the form of a split, pin, etc.) corresponding to the cut-out, groove, recess, etc. E.g. a ▷◁-shape for interlocking with a ▷- and a ◁-shape, etc.

Alternatively, the securing means (103) may be of a different manner and/or shape.

The pipe holding part (101) has a shape to accommodate at least a part of a circumference of at least one pipe. In this particular embodiment, the shape (seen from the front or back) is generally an elongated square shape with a half- or semi circle cut-out giving the pipe holding part (101) a general C- or U-shape with a half- or semi circular surface part (102). The radius of the half-/semi circular surface part (102) determines the size of the pipe that the pipe holding part (101) can receive and hold. The radius of the half-/semi circular surface part (102) may preferably be slightly smaller than the radius of a given pipe, i.e. thereby ensuring a secure and fast grip on the pipe.

Alternatively, the pipe holding part (101) could have two or more half-/semi circular surface parts for accommodating two or more pipes.

Figure 1b schematically illustrates a side view of the pipe holding part (101) of Figure 1 a and shows one side with one of the securing means (103).

Figure 1c schematically illustrates a front (or back) view of the pipe holding part (101) of Figures 1 a and 1 b and shows two securing means (103) one on each side and the half-/semi circular surface part (102).

The pipe holding part (101) is made from a material that has vibration reducing properties, i.e. an elastic material such as rubber, silicone or any other suitable material. According to the present invention two pipe holding parts will be fitted or used together, as shown and explained in greater detail in connection with Figures 2, 4, 5 and 6.

Figure 2 schematically illustrates pipe a receiving element according to an embodiment of the present invention.

Schematically shown is a pipe receiving element (100) comprising two pipe holding parts (101), a first and a second, each like the one shown in Figures 1a □ 1c. In this particular embodiment, the first and the second pipe holding parts (101) are identical thereby just requiring a single mould or the like for production or manufacture of the pipe holding parts (101).

Each pipe holding part (101) comprises □ in this particular embodiment □ securing means (103) and a half- or semi circular surface part (102).

The two pipe holding parts (101) are joined, fitted together, or used in such a way that the opening of their general U- or C-shape faces each other, as also shown in the Figure. In this way, an opening is created for receiving a given pipe. As explained above, by letting the opening be smaller than the pipe to be received, a secure and fast hold is obtained.

How much the opening should or could be smaller for a given pipe will depend on the elasticity of the elastic material used for the pipe holding parts (101) but this is readily determinable for a given pipe and given holding parts (101) of a given elasticity. In principle, the two pipe holding parts (103) could have different elasticity.

The pipe holding parts (101) could be secured together either directly or indirectly both as explained in connection with Figures 4 & 5.

As the elastic material of the pipe receiving element (100) will be located around the circumference of the pipe to be received (or at least be located between the pipe and the fastening surface like a wall, floor, ceiling, etc.) and the elastic material will absorb and reduce kinetic energy of any pipe movement of a pipe being secured by the pipe receiving element (100) then less or no noise is generated due to pipe movement. Furthermore, the pipe can also be fastened in a secure and reliable but simple way by simply enclosing it within the pipe receiving element (100).

Even though an entire pipe holding part (101) can be made of elastic material it is noted that it may only be a substantial part of it that is made of elastic material or even only the half- or semi circular surface part (102) that could be made of elastic material and still provide the same or somewhat less noise reducing effect.

The pipe receiving element (100) would during use be secured (directly or indirectly) to a surface, like a ceiling or a wall or (under) a floor by suitable means (not shown; see e.g. 104 in Figures 4, 5 and 6) e.g. in a pipe securing system as shown in Figures 4, 5 and 6.

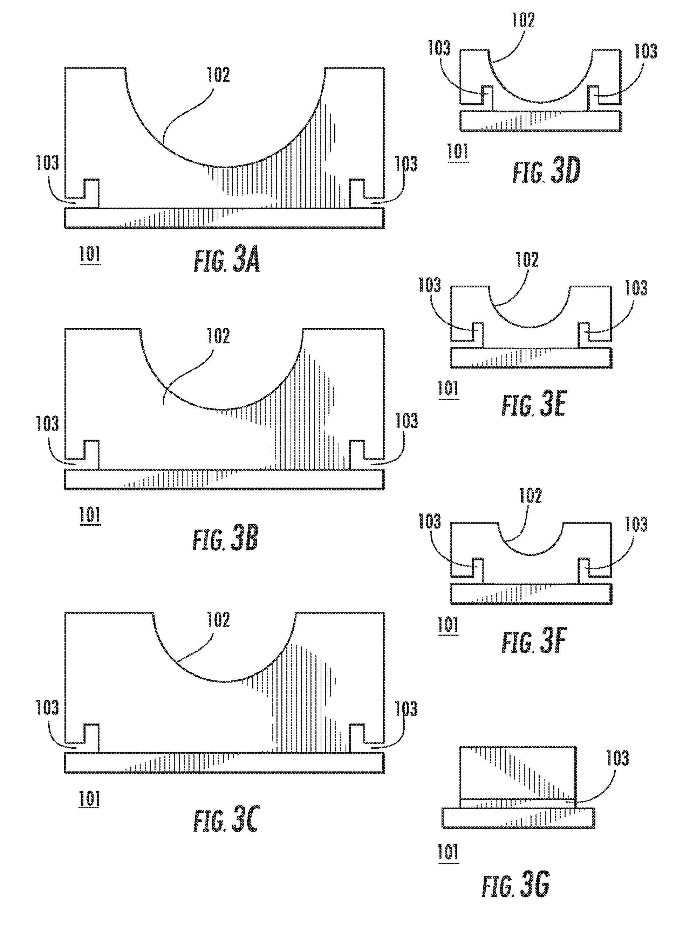

Pipe receiving elements (100) may easily be designed to receive pipes of different sizes by letting the pipe holding parts (101) have a different radius of the half- or semi circular surface part (102), e.g. as will be shown in connection with Figures 3a □ 3g and 4 □ 6.

Figures 3a □ 3g schematically illustrate alternative embodiments of a pipe holding part.

Figure 3a schematically illustrates a front (or back) view of one embodiment of a pipe holding part (101) corresponding to the one in Figures 1 a □ 1c but with a smaller radius of the half- or semi circular surface (102).

Figure 3b schematically illustrates a front (or back) view of one embodiment of a pipe holding part (101) corresponding to the one in Figures 1 a □ 1c and 3a but with an even smaller radius of the half- or semi circular surface (102).

Figure 3c schematically illustrates a front (or back) view of one embodiment of a pipe holding part (101) corresponding to the one in Figures 1 a □ 1c and 3a □ 3b but with a further reduced radius of the half- or semi circular surface (102).

Figure 3d schematically illustrates a front (or back) view of one embodiment of a pipe holding part (101) corresponding in principle to the one in Figures 1a □ 1c and 3a □ 3c but where both the radius of the half- or semi circular surface (102) and the length and height (not necessarily the depth whereby they may be secured by the same frame) of the pipe holding part (101) are different.

In this particular embodiment, both the length and the height of the pipe holding part (101) is half of the length and height of the pipe holding part of Figures 1 a □ 1c and 3a □ 3c.

Figure 3e schematically illustrates a front (or back) view of one embodiment of a pipe holding part (101) corresponding to the one in Figure 3d but where the radius of the half- or semi circular surface (102) is reduced.

Figure 3f schematically illustrates a front (or back) view of one embodiment of a pipe holding part (101) corresponding to the one in Figures 3d and 3e but where the radius of the half- or semi circular surface (102) is reduced further.

Figure 3g schematically illustrates a side view of one of the embodiments of Figures 3d □ 3f.

As can be seen, various sizes of pipes can easily be accommodated by varying the half- or semi circular surface part (102). Furthermore, varying the length and height will give a very compact pipe securing system as explained in connection with Figures 4 and 5.

Figure 4 schematically illustrates a partially exploded perspective view of one embodiment of a modular pipe securing system. Shown is a pipe securing system (105) comprising a number of pipe receiving elements (100), each element comprising two pipe holding parts (101) as explained earlier.

At least some of the pipe receiving elements (100) are directly secured to or integrated with a frame, mount, or the like (104) (while others are secured indirectly) where the frame, mount, or the like (104) can be secured to a relevant surface, like a ceiling, floor, or wall, etc., in a traditional manner thereby securing the pipe receiving elements (100) to the relevant surface.

Along the surface (in the length of the pipe) more pipe securing systems (105) could be fixed to support the pipe(s) at more places along the length of the pipe(s).

Shown are also securing means (103) for securing individual pipe receiving elements (100) to each other. In the shown, exemplary embodiment, the three bigger pipe receiving elements (100) in the left in the Figure are connected using such securing means (103) (two means (103) are used to connect two pipe receiving elements (100)). Each of these securing means (103) does in this example take the form of a split, pin or the like where a part fits in a corresponding cut-out, groove, recess, etc. of each pipe receiving element (100) to be connected, as explained earlier and e.g. where the split, pin or the like is smaller in the middle part than at the end parts thereby securing the pipe receiving elements (100) together or interlocks in another way.

Similar securing means (103) are used to secure the smaller pipe receiving elements (100).

Each securing means (103) generally □ in this particular embodiment □ joins two similar pipe holding parts (101) together. By similar is meant either upper or lower pipe holding parts (101). In this particular Figure, groups of three pipe holding parts (101) are showed joined or fitted together.

One upper and one lower group of three pipe holding parts (101) may be joined or fitted together via additional securing means (106) thereby forming three pipe receiving elements (100). It is to be understood that another number than three may be part of a group and even a single pipe receiving element may be used or built at a time. The additional securing means (106) uses the same cut-out, groove, recess, etc. as the securing means (103) use but whereas the securing means (103) secure parts in the horizontal direction the additional securing means (106) secure parts in the vertical direction e.g. using a square ring, band, or box, or the like.

The additional securing means (106) connects two groups (a lower and an upper) of pipe holding parts (101) while securing means (103) connects a pipe holding part (lower or upper) with a similar pipe holding part (lower or upper) but could also connect a single upper pipe holding part with a lower.

Alternatively, securing means (103) could be used to join a first/upper and a second/lower pipe holding part instead or in addition to the further securing means (106) or vice versa.

As another alternative, other securing means could be used instead of the securing means (103) and/or the additional securing means (106). What is important is that the pipe holding parts (101) and/or pipe receiving elements are joint in a secure way.

In this way, a highly flexible, compact and modular pipe securing system (105) is obtained that easily is adapted to fit a specific need of pipes in a given situation and at the same time providing noise reduction or elimination.

As can be seen from the Figure, some pipe receiving elements (100) have a cut-out or hole with a diameter that is significantly smaller than the area of the pipe receiving element itself, e.g. the two rightmost pipe receiving elements (100) of the three large elements (100) showed to the left. For these, the cut-out or hole is not located centrally but is located with a greater distance between the cut-out or hole and the frame (104) and thereby with a greater distance to the surface the pipes are secured to than the distance between the cut-out or hole and the other end. This ensures that more elastic material is between the pipe (when in place) and the securing surface than if the pipe was located at the center, which gives even better noise reduction or elimination.

In alternative embodiments, the pipe receiving cut-out or hole could be located in the center of each pipe receiving element (100) or at another position.

According to a preferred embodiment of the present invention and as shown in the Figures, the pipe receiving elements (100) □ or modules □ can have different sizes. One size can be a unit or reference size, e.g. the largest length and/or height, while other pipe receiving elements (100) will have an integer fraction of the unit or reference size. The integer fraction may e.g. be 1/2, 1/3, 1/4, etc.

As a specific example, the larger pipe receiving elements (100) may have a (horizontal) length and (vertical) height, each of 150 mm while the smaller pipe receiving elements (100) may have a (horizontal) length and (vertical) height, each of 75 mm. Alternatively, other lengths and/or heights can be used.

This gives that a smaller pipe receiving element (100) can be used for smaller pipes, which gives the advantage that a particular system can be put together, fitting the specific need for piping at a given location, which will give a very compact system for a given specific number and types of pipe (while being noise reducing).

Furthermore, by having pipe receiving elements (100) that can accommodate two or more pipes in the vertical direction then space is saved in the horizontal direction and the packing of the pipes may be optimized. E.g. if you have one relatively large pipe (e.g. requiring one element (100) of 15 cm with room for only one pipe) and two relatively smaller pipes (e.g. each requiring one element (100) of 7.5 cm with room for only one pipe) then the elements (100) for the two smaller pipes can be stacked vertically saving horizontal space but not requiring more vertical space than the element for the larger pipe.

Additionally, splitting the frame (104) up into several sub-frames (as shown in the Figure) enables easier setup and/or maintenance as a sub-section at a time may be set up or removed instead of the entire frame (104).

Figure 5 schematically illustrates the embodiment of Figure 4 in a non-exploded view. The embodiment corresponds to the embodiment of Figure 4 but where all the pipe receiving elements (100) have been joined or fitted together and secured. Here the compactness of the pipe securing system can readily be seen.

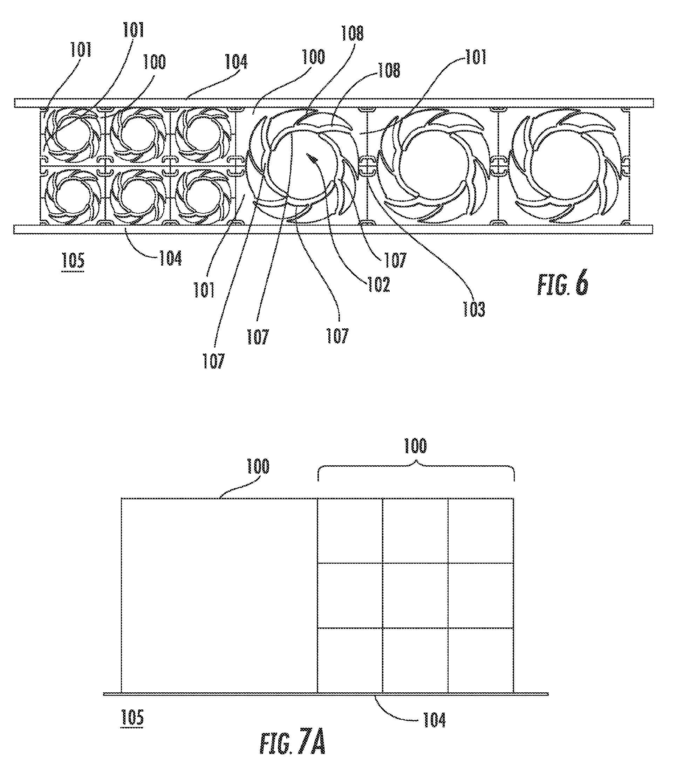

Figure 6 schematically illustrates an alternative embodiment of a modular pipe securing system with alternative pipe receiving elements and pipe holding parts.

Shown is a pipe securing system (105) comprising a number of pipe receiving elements (100), each element comprising two pipe holding parts (101) joined, fitted together, or located as explained earlier. The various pipe receiving elements (100) are joined or fitted together securing means (103) e.g. similar to the ones explained earlier.

The pipe receiving elements (100) are directly secured to or integrated with at least one frame, mount, or the like (104) while some (the larger ones) are secured to two of such frames, mounts, or like where only one of these typically is secured to a surface.

These alternative pipe holding parts (101) has a shape to accommodate at least a part of a circumference of at least one pipe. In this particular embodiment, the pipe holding part (101) (seen from the front or back) has at least one half- or semi circle shape giving the pipe holding part (101) a general C- or U-shape with a half- or semi circular surface part (102). The radius of the half-/semi circular surface part (102) determines the size of the pipe that the pipe holding part (101) can receive and hold. The radius of the half-/semi circular surface part (102) may preferably be slightly smaller than the radius of a given pipe, i.e. thereby ensuring a secure and fast grip on the pipe.

In this alternative embodiment, the general C- or U-shape of a pipe holding part (101) is formed by two flexible members (107) that each has a semi circular surface part (102) for abutting against the pipe and flexible connection portions or the like (108) for connecting to the semi circular surface part (102) or flexible member (107) with the rest of the pipe holding part (101). In this particular embodiment, each semi circular surface part (102) is connected by two flexible connection portions (108) of different width.

The flexibility and size enable the connection portions (108) enable the connection portion to deform or bend more easily than e.g. the corresponding part of Figures 4 and 5 whereby a single pipe receiving element (100) comprising two pipe holding parts (101) readily can accommodate different sizes of pipes and becomes more universal. For larger diameter pipes it will simply deform more.

So the pipe securing system (105) only comprises two different sizes of pipe receiving elements (100), where one (the smaller) e.g. can hold all pipe sizes from about 15 mm to about 30 mm (the larger) e.g. can hold all pipe sizes from about 30 mm to about 90 mm.

This has the advantage over the embodiment of Figures 4 and 5 that only 2 sizes of pipe receiving elements (100) needs to be produced or be available to support a larger selection of pipes.

Furthermore, the specific layout (use of connection portions (108)) also give a pipe being secured more room to vibrate, which may dampen and/or eliminate the vibration even more.

Figure 7a □ 7c schematically illustrate various configurations of a modular pipe securing system.

The configuration in Figure 7a shows a pipe securing system (105) secured to a frame (104) secured to a relevant surface, the system (105) comprising one pipe receiving element (100) (showed to the left) of unit size and nine pipe receiving elements (100) (showed to the right) being one third of the unit size.

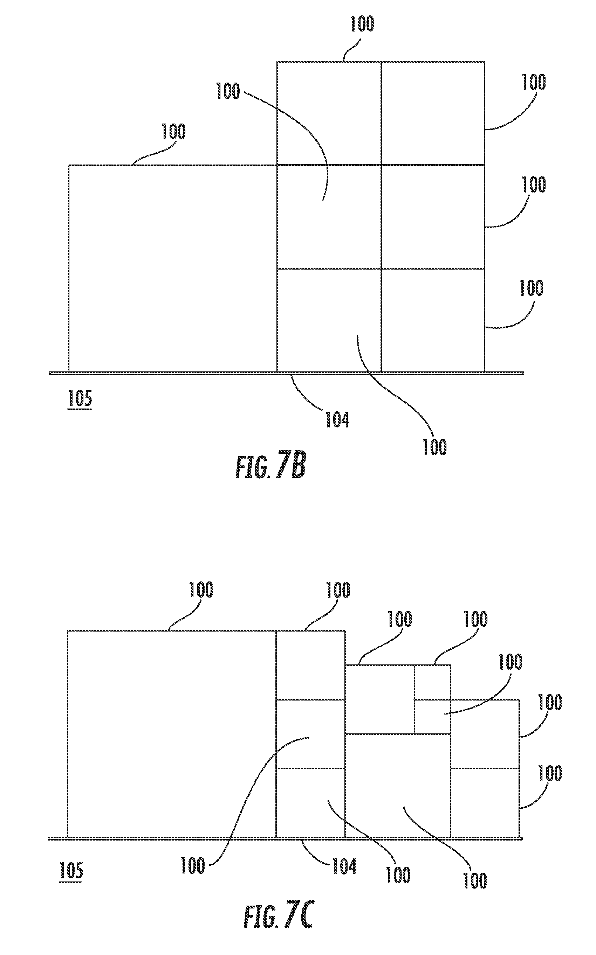

The configuration in Figure 7b shows a pipe securing system (105) comprising one pipe receiving element (100) (showed to the left) of unit size and six pipe receiving elements (100) (showed to the right) being one half of the unit size. Here is shown a configuration that readily saves horizontal length.

The configuration in Figure 7c shows a pipe securing system (105) comprising one pipe receiving element (100) (showed to the left) of unit size, 1 pipe receiving element (100) being one half of the unit size, 6 pipe receiving elements (100) being one third of the unit size, and 2 pipe receiving elements (100) being one sixth of the unit size.

As mentioned before and shown in the earlier Figures, the pipe receiving elements (100) □ even of the same size □ can have different diameters thereby accommodating different sized pipes and/or readily support several pipe sizes with the same diameter as shown in connection with Figure 6.

As can be seen, any mix of appropriate pipe receiving elements (100) can be used to suit securing of a given mix of pipes.

Configurations could also be contemplated where the length and the height was not the same fraction of the unit size, e.g. a configuration where the length was 1/3 while the height was 1/2, etc. As an example, 1/3 and 1/2 would give a configuration of 3x2 smaller pipe receiving elements (100) where the length is the same as for the smaller elements in Figure 7a while the height is 1.5 times the height of smaller elements in Figure 7a.

In the claims, any reference signs placed between parentheses shall not be constructed as limiting the claim. The word "comprising" does not exclude the presence of elements or steps other than those listed in a claim. The word "a" or "an" preceding an element does not exclude the presence of a plurality of such elements.

The mere fact that certain measures are recited in mutually different dependent claims does not indicate that a combination of these measures cannot be used to advantage.

## Claims

1. A pipe receiving element (100) for reducing vibration and/or movement of a pipe, the pipe receiving element (100) comprising
- a first pipe holding part (101), and
- a second pipe holding part (101),
each pipe holding part (101) comprising at least one half- or semi circular surface part (102), wherein the first and second pipe holding part (101) when fitted together are adapted to receive a pipe, and wherein the pipe receiving element (100) further comprises
- securing means (103) adapted to secure at least one pipe holding part (101) of the pipe receiving element (101) to another first and/or second pipe holding part (101), and/or
- additional securing means (106) adapted to secure a first holding part (101) to a second pipe holding part (101), and
wherein at least a part of said first and said second pipe holding part (101) are made of elastic material.

2. The pipe receiving element (100) according to claim 1, wherein said first and said second pipe holding part (101) each are of a generally U- or C-shape, and wherein said first and said second pipe holding part (101) are fitted together in such a way that the opening of their general U- or C-shape faces each other.

3. The pipe receiving element (100) according to any one of claims 1 □ 2, wherein
- a substantial part of said first and said second pipe holding part (101) are made of elastic material,
- at least said half- or semi circular surface part (102) of each said first and said second pipe holding part (101) are made of elastic material, or
- said first and said second pipe holding part (101) entirely are made of elastic material.

4. The pipe receiving element (100) according to any one of claims 1 □ 3, wherein said elastic material is rubber or silicone.

5. The pipe receiving element (100) according to any one of claims 1 □ 4, wherein
- said securing means (103) comprises a general L-shaped, T-shaped, cone-shaped, or ▷-shaped cut-out, groove, or recess and a general double L-shaped, double T-shaped, double cone-shaped, or double ▷ -shaped split or pin being interlocking, and/or
- said additional securing means (106) comprises a general L-shaped, T-shaped, cone-shaped, or ▷ -shaped cut-out, groove, or recess and a general band or box being interlocking.

6. The pipe receiving element (100) according to any one of claims 1 □ 5, wherein a center of an area being defined by the half- or semi circular surface part (102) of said a first and said second pipe holding parts (101) is located more towards one side than another side.

7. The pipe receiving element according to any one of claims 1 □ 7, wherein the half- or semi circular surface part (102) of a pipe holding part (101) is defined by at least one flexible member (107) where each flexible member (107) is connected by a flexible connection portion (108) to said pipe holding part (101).

8. A pipe securing system (105) comprising at least two pipe receiving elements (100) where one pipe receiving element (100) has a first given length in a given direction while the other pipe receiving element (100) has a second given length in the given direction where the second given length is an integer fraction of the first given length.

9. The pipe securing system according to claim 8, wherein said at least two pipe receiving elements (100) are pipe receiving elements (100) according to any one of claims 1 □ 7.

10. A use of at least two pipe receiving elements (100) according to any one of claims 1 □ 7 in a pipe securing system.
